# EUROPEAN PATENT SPECIFICATION

(11) **EP 3 587 880 B1**
(45) Date of publication and mention of the grant of the patent: **20.10.2021**
(21) Application number: 19182869.8
(22) Date of filing: 27.06.2019
(51) Int. Cl.: F16K 31/08, F16K 31/385, F16K 31/524, F16K 31/56

(54) **FLOW CONTROL SWITCH VALVE**
STROMSTEUERSCHALTVENTIL
SOUPAPE DE COMMUTATION AVEC COMMANDE D'ÉCOULEMENT

(30) Priority: 27.06.2018 CN 201821004489 U; 26.06.2019 US 201916452774
(43) Date of publication of application: 01.01.2020
(73) Proprietor: Beijing Kohler Ltd., 101500 Beijing (CN)
(72) Inventor: XIA, Pengcheng, Beijing, Beijing 101500 (CN)
(74) Representative: Barker Brettell LLP

(56) References cited:
- EP-A1- 2 865 928
- EP-A1- 2 868 953
- BE-A- 811 563
- CN-A- 106 641 277

## Description

### CROSS-REFERENCE TO RELATED PATENT APPLICATIONS

This application claims priority to and the benefit of both U.S. Patent App. No. 16/452,774 filed June 26, 2019 and Chinese Utility Model No. 201821004489.X, filed June 27, 2018.

### FIELD

The present application relates to the field of bathroom plumbing technologies, and more particularly, to a flow regulating switch valve for use in faucets and the like.

### BACKGROUND

In the sanitary industry, existing faucets mostly use ordinary valve cores, and the flow of water increases with the increase of a water pressure. A water discharge amount is regulated by an opening angle of the handle, or the flow is restricted using a flow restrictor. An improper opening position of the handle may result in wasting of water, and the flow restrictor may be easily blocked and can be inconvenient to use.

It would thus be advantageous to provide a faucet that includes a mechanism that can not only control the opening and closing of the valve, but which can also regulate the flow of water from the valve. These and other advantageous features will become apparent to those reviewing the present disclosure.

EP2865928 discloses a system for opening and closing a domestic water diffuser, in particular for opening and closing water in a shower or bathroom or kitchen sink. The system comprises a shutter with at least one metal part slidable inside a cylindrical chamber. The system also comprises a pushbutton comprising a magnet. The pushbutton is configured to be operated by means of a finger to mechanically displace the shutter by means of the magnet along an axis of the cylindrical chamber, into two different positions, corresponding to opening of the flow or closing of the flow of water from a diffuser. The pushbutton is also rotatable about the axis, to vary the open position of the shutter along the axis and a corresponding flowrate.

EP2868953 discloses a control unit with a control element for controlling a valve, in particular a servo valve, and a switching device for actuating the control element. The switching device is magnetically coupled to the control element. The switching device has an end position setting for setting at least one end position of the control element.

CN106641277 discloses a switch valve. The switch valve comprises a switch assembly, a plug assembly, a diaphragm assembly and a water cavity. A water inlet and a water outlet are arranged on the water cavity. The switch assembly is used to control the up and down movement of the plug assembly. The plug assembly is used to control plugging of the diaphragm assembly or the opening of the water outlet. The switch valve further comprises a flow regulation assembly. When the diaphragm assembly opens the water outlet, the flow regulation assembly is used to adjust the plug assembly, and the plug assembly is used to control the size of the water outlet opened by the diaphragm assembly. The switch assembly is used to control the on-and-off of the flow regulation assembly, and the flow regulation assembly can control the size of the water outlet opened by the diaphragm assembly through regulating the plug assembly. The switch valve can control the open-and-close of water flow and regulate the flow amount.

### SUMMARY

An exemplary embodiment relates to a flow regulating switch valve that includes a control key and a valve core comprising a switch assembly and a diaphragm assembly. The control key is configured to press and control the switch assembly, and the switch assembly is configured to drive the diaphragm assembly to open or close a water outlet. The valve core further comprises a flow regulating assembly that comprises a rotating ring, a sliding block, and a magnet. The rotating ring is connected with the control key in a synchronous rotation manner. The rotating ring comprises an inclined plane that transitions from high to low and is configured to drive the sliding block to slide up and down when rotating such that the sliding block drives the magnet to move up and down. The magnet is configured to control the diaphragm assembly to regulate a size of the water outlet. The rotating ring comprises a ring body, and a lower surface of the ring body is provided with the inclined plane. The sliding block is provided with a convex strip extending along a vertical direction, and an upper surface of the convex strip is in contact with the inclined plane.

Another example, not according to an embodiment, relates to a flow regulating switch valve that includes a valve core that includes a switch assembly configured to drive a diaphragm assembly to open or close a water outlet, and also includes a flow regulating assembly that comprises a rotating ring, a sliding block, and a magnet. A control key is configured to control the switch assembly. The rotating ring is connected to the control key and includes an inclined plane that transitions from high to low and is configured to drive the sliding block to slide up and down such that the sliding block drives the magnet to move up and down. The magnet is configured to control the diaphragm assembly to regulate a size of the water outlet.

According to another example, not according to an embodiment, a regulating switch valve includes a control key and a valve core. The valve core includes a switch assembly and a diaphragm assembly. The control key is configured to press and control the switch assembly, and the switch assembly is configured to drive the diaphragm assembly to open or close a water outlet. The valve core further comprises a flow regulating assembly that includes a rotating ring, a sliding block, and a magnet. The rotating ring is connected with the control key in a synchronous rotation manner, and comprises an inclined plane that is gradually transited from high to low. The inclined plane of the rotating ring is configured to drive the sliding block to slide up and down when rotating. The sliding block drives the magnet to move up and down, and the magnet is configured to control the diaphragm assembly to regulate a size of the water outlet. The rotating ring comprises a ring body, and a lower surface of the ring body is provided with the inclined plane. The sliding block is provided with a convex strip extending along a vertical direction, and an upper surface of the convex strip is contacted with the inclined plane.

According to some exemplary embodiments, the valve core further comprises a valve cap and a valve seat. The valve cap is provided with a circular arc-shaped guide table, and the rotating ring is sleeved on an outer surface of the valve cap. The ring body extends downwardly to form a guide bulge, and a lower surface of the guide bulge is contacted with an upper surface of the guide table. The guide bulge slides along the guide table when the rotating ring rotates, and the guide table is configured to limit the rotating ring so that an axial position of the rotating ring is unchanged.

According to some exemplary embodiments, each of the ends of the guide table extends upwardly to form a limiting bulge, and the limiting bulge is configured to limit the guide bulge to slide in the guide table. Further, the limiting bulge is provided with a sliding groove along a vertical direction. The convex strip of the sliding block passes through the sliding groove. The upper surface of the convex strip is contacted with the inclined plane of the rotating ring, and the convex strip can slide up and down along the sliding groove.

According to some exemplary embodiments, the valve seat is provided with a guide groove, and a lower end of the convex strip is inserted into the guide groove. A compression spring is mounted between a lower surface of the sliding block and the valve seat, and the compression spring is configured to keep the convex strip in contact with the inclined plane.

According to some exemplary embodiments, the control key is cylindrical, and an inner wall surface of the control key is provided with a limiting groove along a vertical direction; and an outer circumference surface of the ring body is further provided with a mounting lug matched with the limiting groove, the mounting lug can slide along the limiting groove in a vertical direction, the limiting groove is configured to limit a circumferential movement of the mounting lug, and the limiting groove drives the mounting lug of the rotating ring to rotate when the control key rotates.

According to some exemplary embodiments, the valve core further comprises a fixing ring and an elastic sheet, and the fixing ring mounts the elastic sheet on the valve core; and an upper surface of the ring body is provided with at least one section of saw teeth, and the saw teeth are contacted with a lower surface of the elastic sheet.

According to some exemplary embodiments, the flow regulating switch valve further comprises a housing and a nut, and the nut tightly locks the valve core into the housing.

According to some exemplary embodiments, the rotating ring is driven to rotate through the control key. When rotating, the rotating ring drives the sliding block to slide up and down, then the sliding block drives the magnet to move up and down, and the magnet is configured to control the diaphragm assembly to regulate the size of the water outlet, thereby regulating an opening size of the water outlet. The opening or closing of the water outlet is controlled by pressing the control key, and then a water discharge amount of the water outlet is regulated by rotating the control key, which not only can control the opening and closing, but also can regulate the flow.

### BRIEF DESCRIPTION OF THE DRAWINGS

The present disclosure will be understood with reference to the accompanying drawings. It is to be understood that the drawings are for the purpose of illustration only, and are not intended to limit the scope of the present application. In the drawings:
Fig. 1 is a perspective view of a flow regulating switch valve according to an exemplary embodiment;
Fig. 2 is an exploded view of the flow regulating switch valve shown in Fig. 1;
Fig. 3 is an exploded view of a valve core of the flow regulating switch shown in Fig. 1;
Fig. 4 is a perspective view of the valve core of the flow regulating switch valve in a maximum flow state according to an exemplary embodiment;
Fig. 5 is a perspective view of the valve core of the flow regulating switch valve in a minimum flow state according to an exemplary embodiment;
Fig. 6 is a longitudinal sectional view of the valve core of the flow regulating switch valve in one orientation of the maximum flow state according to an exemplary embodiment;
Fig. 7 is a longitudinal sectional view of the valve core of the flow regulating switch valve in another orientation of the maximum flow state according to an exemplary embodiment;
Fig. 8 is a longitudinal sectional view of the valve core of the flow regulating switch valve in one orientation of the minimum flow state according to an exemplary embodiment; and
Fig. 9 is a longitudinal sectional view of the valve core of the flow regulating switch valve in another orientation of the minimum flow state according to an exemplary embodiment.

### DETAILED DESCRIPTION

The present application aims to provide a flow regulating switch valve for a faucet, which can not only control the opening and closing of the valve, but can also regulate the flow of water. In this manner, the concepts disclosed herein are intended to overcome certain defects such as those described above in existing systems.

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

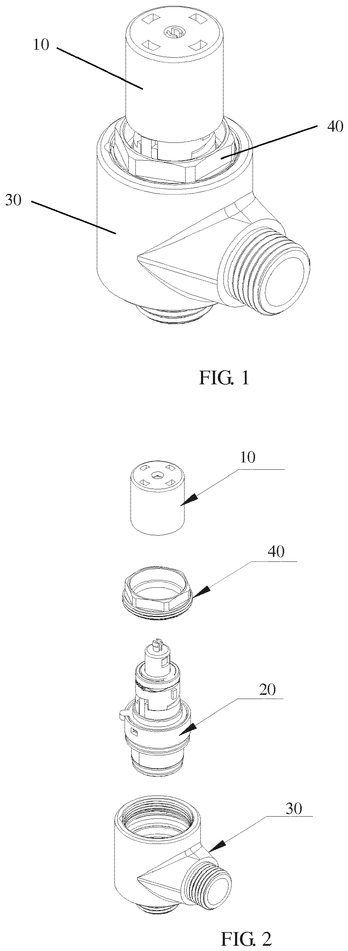

As shown in Figs. 1 to 3, a flow regulating switch valve includes a control key 10 and a valve core 20. The valve core 20 includes a switch assembly 1 and a diaphragm assembly 2. The control key 10 is configured to press and control the switch assembly 1. The switch assembly 1 is configured to drive the diaphragm assembly 2 to open or close a water outlet. The valve core 20 further includes a flow regulating assembly 3, the flow regulating assembly 3 further includes a rotating ring 31, a sliding block 32 and a magnet 33, the rotating ring 31 is connected with the control key 10 in a synchronous rotation manner, the rotating ring 31 includes an inclined plane 311, the inclined plane 311 is gradually transited from high to low, the inclined plane 311 of the rotating ring 31 is configured to drive the sliding block 32 to slide up and down when rotating, the sliding block 32 drives the magnet 33 to move up and down, and the magnet 33 is configured to control the diaphragm assembly 2 to regulate a size of the water outlet 4.

The embodiment includes two control methods.

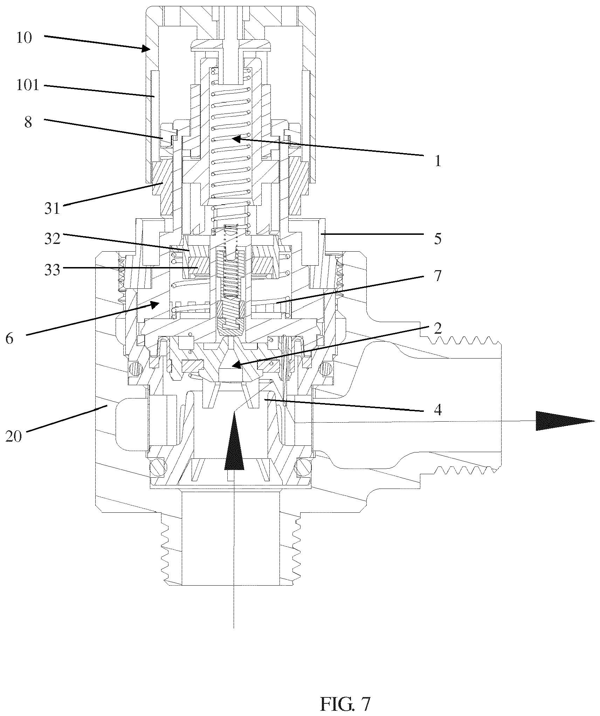

The first method is to press and control by the control key 10, wherein the switch assembly 1 is controlled by pressing the control key 10. The switch assembly 1 drives the diaphragm assembly 2 to move up and down, and the diaphragm assembly 2 controls the opening or closing of the water outlet 4 (see Fig. 7).

Operation of the switch assembly switch assembly 1 is similar to a pressing switch mode of a ballpoint pen. When pressing the control key 10, the switch assembly 1 is pressed down, and when the diaphragm assembly 2 is pressed down, the water outlet 4 is blocked; when lifting the control key 10, the switch assembly 1 is lifted, and the diaphragm assembly 2 opens the water outlet 4.

A second control method is to rotationally control the control key 10, wherein the rotating ring 31 is driven to rotate by rotating the control key 10, and the inclined plane 311 on the rotating ring 31 is in contact with the sliding block 32. The rotating ring 311 is rotated only in the same axial direction, and pushes the sliding block 32 in the up-down direction due to a change in a contact portion of the inclined plane 311 and the sliding block 32. When the sliding block 32 is in contact with a highest point of the inclined plane 311, the sliding block 32 is at a highest position, the magnet 33 in the sliding block 32 is also at the highest position, the magnet 33 drives the diaphragm assembly 2 to move up, the diaphragm assembly 2 opens the water outlet 4 to the largest at the moment, and the water discharge amount is also the largest. When the sliding block 32 is in contact with a lowest point of the inclined plane 311, the sliding block 32 is at a lowest position, the magnet 33 in the sliding block 32 is also at the lowest position, the magnet 33 drives the diaphragm assembly 2 to move down, the diaphragm assembly 2 opens the water outlet 4 to the smallest at the moment, and the water discharge amount is also the smallest.

The embodiment drives the rotating ring to rotate by the control key; when rotating, the rotating ring drives the sliding block to slide up and down, then the sliding block drives the magnet to move up and down, and the magnet is configured to control the diaphragm assembly to regulate the size of the water outlet, thereby regulating an opening size of the water outlet. The utility model controls the opening or closing of the water outlet by pressing the control key, and then regulates a water discharge amount of the water outlet by rotating the control key, which not only can control the opening and closing, but also can regulate the flow.

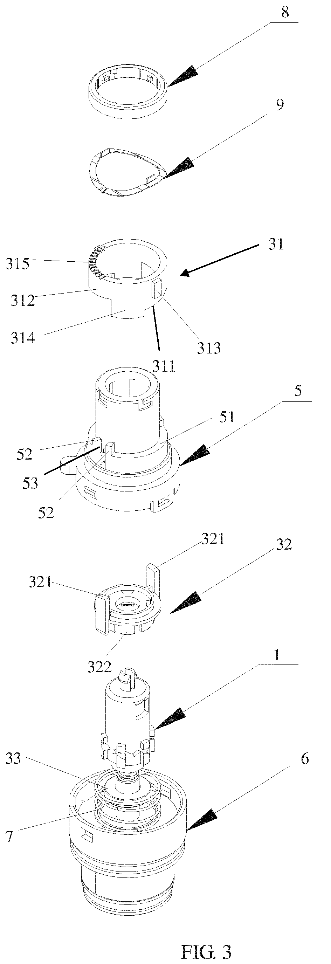

Further, as shown in Fig. 3, the rotating ring 31 includes a ring body 312, and a lower surface of the ring body 312 is provided with the inclined plane 311.

The sliding block 32 is provided with a convex strip 321 extending along a vertical direction, and an upper surface of the convex strip 321 is contacted with the inclined plane 311.

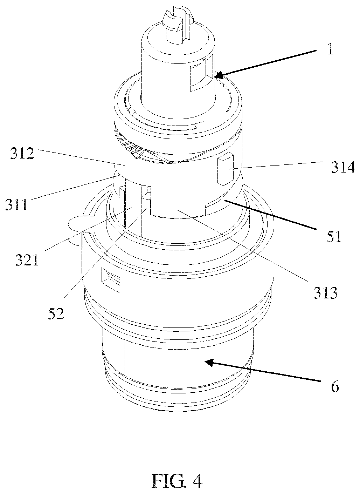

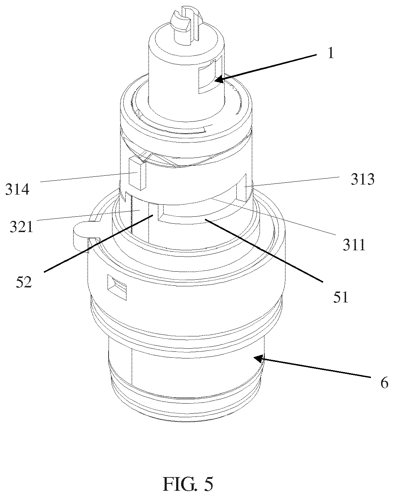

As shown in Fig. 4, the upper surface of the convex strip 321 is in contact with the highest point of the inclined plane 311 at the moment. As shown in Fig. 5, the upper surface of the convex strip 321 is in contact with the lowest point of the inclined plane 311 at the moment.

In this embodiment, two convex strips 321 and two inclined planes 311 are provided.

Optionally, only one or other numbers of the convex strips 321 and the inclined planes 311 may be provided.

Further, as shown in Fig. 3, the valve core 20 further includes a fixing ring 8 and an elastic sheet 9, wherein the fixing ring 8 mounts the elastic sheet 9 on the valve core 20.

An upper surface of the ring body 312 is provided with at least one section of saw teeth 315, and the saw teeth 315 are contacted with a lower surface of the elastic sheet 9.

The fixing ring 8 and the elastic sheet 9 are fixed, and when the rotating ring 31 rotates, the saw teeth 315 push the elastic sheet 9 to increase a rotational hand feeling.

Optionally, the fixing ring, the elastic sheet, and the saw teeth may not be provided.

Further, as shown in Figs. 1 to 2, the flow regulating switch valve further includes a housing 30 and a nut 40, and the nut 40 tightly locks the valve core 20 into the housing 30.

Further, as shown in Figs. 3 to 5, the valve core 20 further includes a valve cap 5 and a valve seat 6.

The valve cap 5 is provided with a circular arc-shaped guide table 51, the rotating ring 31 is sleeved on an outer surface of the valve cap 5, the ring body 312 downwardly extends out of a guide bulge 313, a lower surface of the guide bulge 313 is contacted with an upper surface of the guide table 51, the guide bulge 313 slides along the guide table 51 when the rotating ring 31 rotates, and the guide table 51 is configured to limit the rotating ring 31 so that an axial position of the rotating ring 31 remains unchanged.

Specifically, the guide table 51 is a plane on a horizontal plane, and the lower surface of the guide bulge 313 is also a plane on the horizontal plane. Since the guide table 51 is fixed to the valve cap 5, a position of the guide table 51 is fixed. When the guide bulge 313 slides along the guide table 51, the axial position of the rotary ring 31 is limited to be unchanged, that is, the rotating ring 31 is rotated only on the same horizontal plane, rather than moving up and down in the axial direction.

Further, as shown in Figs. 3 to 5, two ends of the guide table 51 upwardly extend to form two limiting bulges 52, and the limiting bulges 52 are configured to limit the guide bulge 313 to slide in the guide table 51.

The two limiting bulges 52 are configured to limit the limiting position of the guide bulge 313 in the clockwise and counterclockwise directions of the guide table 51, so that the guide bulge 313 cannot slide out from the guide table 51, and a maximum rotation angle of the control key 10 is also limited.

Preferably, the maximum rotation angle of the control key 10 is 90 degrees.

Further, as shown in Figs. 3 to 5, the limiting bulge 52 is provided with a sliding groove 53 along a vertical direction, the convex strip 321 of the sliding block 32 passes through the sliding groove 53, the upper surface of the convex strip 321 is contacted with the inclined plane of the rotating ring 31, and the convex strip 321 can slide up and down along the sliding groove 53.

The sliding groove 53 limits the sliding block 32 to slide only in the up-down direction and cannot be rotated. The sliding block 32 can only be driven to slide up and down by the rotating ring 31.

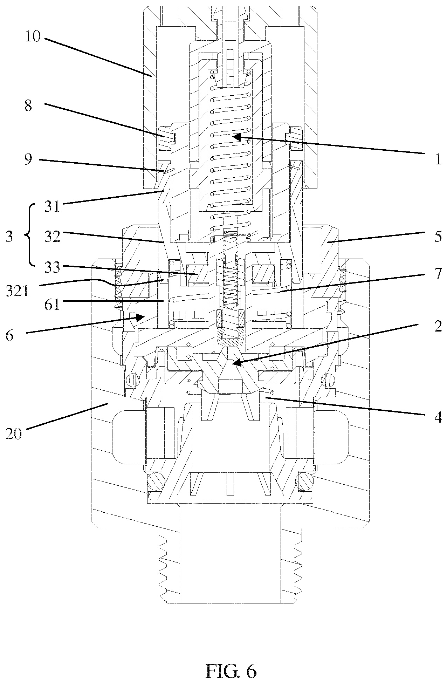

Further, as shown in Fig. 6, the valve seat 6 is provided with a guide groove 61, and a lower end of the convex strip 321 is inserted into the guide groove 61.

The guide groove 61 is configured to position the sliding block 32, the lower end of the convex strip 321 of the sliding block 32 is inserted into the guide groove 61, and the guide groove 61 provides a sufficient space for the up and down movement of the convex strip 321. An upper end of the convex strip 321 passes through the sliding groove 53 of the valve cap 5, and is in contact with the inclined plane 311.

Further, as shown in Figs. 6 to 7, a compression spring 7 is mounted between a lower surface of the sliding block 32 and the valve seat 6, and the compression spring 7 is configured to keep the convex strip 321 in contact with the inclined plane 311. The compression spring 7 is accommodated in a cavity between the valve seat 6 and the sliding block 32 such that the rotating ring 31 can always drive the sliding block 32 to move up and down.

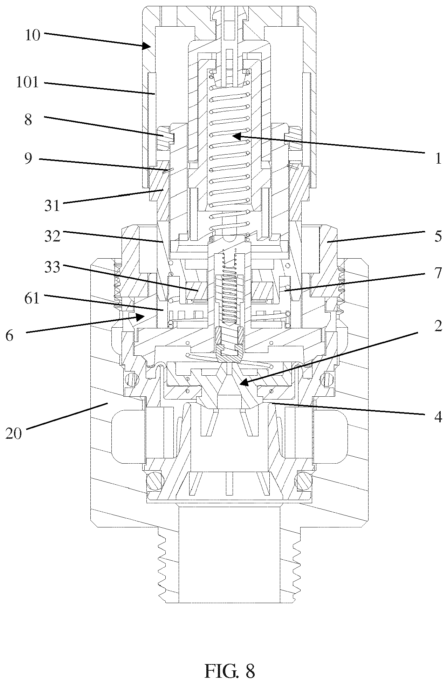

Further, as shown in Figs. 4 to 5 and Figs. 7 to 8, the control key 10 is cylindrical, and an inner wall surface of the control key 10 is provided with a limiting groove 101 along a vertical direction.

An outer circumference surface of the ring body 312 is further provided with a mounting lug 314 matched with the limiting groove 101, the mounting lug 314 can slide along the limiting groove 101 in a vertical direction, the limiting groove 101 is configured to limit a circumferential movement of the mounting lug 314, and the limiting groove 101 drives the mounting lug 314 of the rotating ring 31 to rotate when the control key 10 rotates.

When the control key 10 is pressed, the limiting groove 101 moves up and down, the mounting lug 314 does not move in the limiting groove 101, and a height of the limiting groove 101 is greater than a height of the mounting lug 314.

When the control key 10 rotates, the limiting groove 101 drives the mounting lug 314 to rotate together, thereby controlling the rotating ring 31 to rotate.

As described herein, according to an exemplary embodiment in which the flow regulating operation is operated in a maximum flow state, with reference to in Fig. 4 and Figs. 6 to 7, when rotating the control key 10 in a forward direction, the control key 10 drives the rotating ring 31 to rotate. When the highest point of the inclined plane 311 of the rotating ring 31 is in contact with the convex strip 321, the sliding block 32 rises to the highest position. At this time, the magnet 33 also rises to the highest position. The magnet 33 drives the diaphragm assembly 2 to also rise to the highest position, and the diaphragm assembly 2 opens the water outlet 4 to the maximum. A direction indicated by an arrow in Fig. 7 is a direction of a water flow.

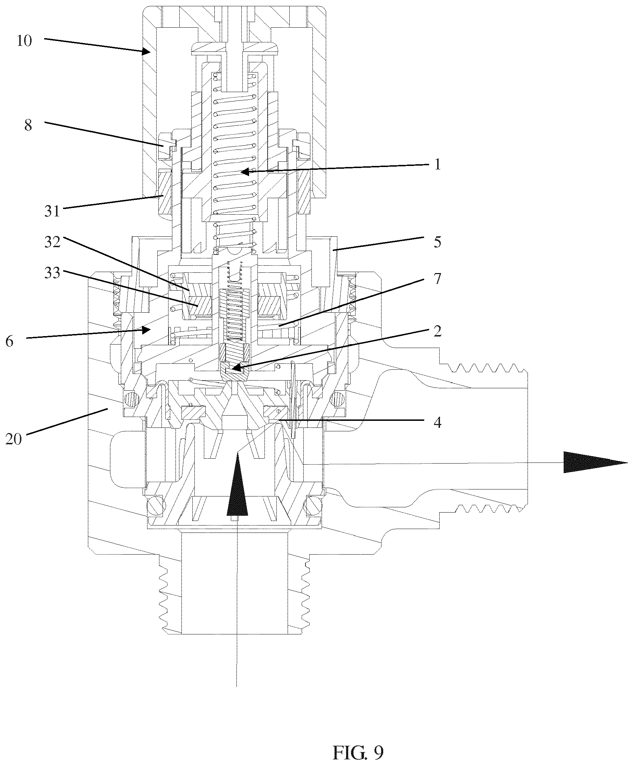

In the minimum flow state, with reference to Fig. 5 and Figs. 8 to 9, when rotating the control key 10 in the reverse direction, the control key 10 drives the rotating ring 31 to rotate. When the lowest point of the inclined plane 311 of the rotating ring 31 is in contact with the convex strip 321, the sliding block 32 drops to the lowest position. At this time, the magnet 33 also drops to the lowest position. The magnet 33 drives the diaphragm assembly 2 to also drop to the lowest position, and the diaphragm assembly 2 opens the water outlet 4 to the minimum.

When the water outlet 4 needs to be closed, the water outlet 4 can be closed by pressing the control key 10 downward. When the water outlet 4 needs to be opened again, the water outlet 4 can opened by pressing the control key 10 downward, and then the flow is regulated by rotating the control key 10.

The descriptions above are merely principles and exemplary embodiments of the concepts described herein.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the components as shown in the various exemplary embodiments is illustrative only. Additionally, any element disclosed in one embodiment may be incorporated or utilized with any other embodiment disclosed herein. Although only one example of an element from one embodiment that can be incorporated or utilized in another embodiment has been described above, it should be appreciated that other elements of the various embodiments may be incorporated or utilized with any of the other embodiments disclosed herein.

## Claims

1. A flow regulating switch valve comprising:
a control key (10); and
a valve core (20) comprising a switch assembly (1) and a diaphragm assembly (2);
wherein:
the control key (10) is configured to press and control the switch assembly (1);
the switch assembly (1) is configured to drive the diaphragm assembly (2) to open or close a water outlet (4);
the valve core (20) further comprises a flow regulating assembly (3) that comprises a rotating ring (31), a sliding block (32), and a magnet (33);
the rotating ring (31) is connected with the control key (10) in a synchronous rotation manner;
the rotating ring (31) comprises an inclined plane (311) that transitions from high to low and is configured to drive the sliding block (32) to slide up and down when rotating such that the sliding block (32) drives the magnet (33) to move up and down; and
the magnet (33) is configured to control the diaphragm assembly (2) to regulate a size of the water outlet (4); the flow regulating switch valve being **characterised in that**
the rotating ring (31) comprises a ring body (312), and a lower surface of the ring body (312) is provided with the inclined plane (311); and **in that** the sliding block (32) is provided with a convex strip (321) extending along a vertical direction, and an upper surface of the convex strip (321) is in contact with the inclined plane (311).

2. The flow regulating switch valve according to claim 1, wherein:
the valve core (20) further comprises a valve cap (5) and a valve seat (6); and
the valve cap (5) is provided with a circular arc-shaped guide table (51), the rotating ring (31) is sleeved on an outer surface of the valve cap (5), the ring body (312) extends downwardly to form a guide bulge (313), a lower surface of the guide bulge (313) is in contact with an upper surface of the guide table (51), the guide bulge (313) slides along the guide table (51) when the rotating ring (31) rotates, and the guide table (51) is configured to limit the rotating ring (31) so that an axial position of the rotating ring (31) is unchanged.

3. The flow regulating switch valve according to claim 2, wherein ends of the guide table (51) extends upwardly to form a limiting bulge (52), and the limiting bulge (52) is configured to limit the guide bulge (313) to slide in the guide table (51).

4. The flow regulating switch valve according to claim 3, wherein the limiting bulge (52) is provided with a sliding groove (53) along a vertical direction, the convex strip (321) of the sliding block (32) passes through the sliding groove (53), the upper surface of the convex strip (321) is in contact with the inclined plane (311) of the rotating ring (31), and the convex strip (321) can slide up and down along the sliding groove (53).

5. The flow regulating switch valve according to claim 4, wherein a guide groove (61) is provided in the valve seat (6), and a lower end of the convex strip (321) is inserted into the guide groove (61).

6. The flow regulating switch valve according to claim 5, wherein a compression spring (7) is mounted between a lower surface of the sliding block (32) and the valve seat (6), and the compression spring (7) is configured to keep the convex strip (321) in contact with the inclined plane (311).

7. The flow regulating switch valve according to claim 1, wherein:
the control key (10) is cylindrical, and an inner wall surface of the control key (10) is provided with a limiting groove (101) along a vertical direction; and
an outer circumference surface of the ring body (312) is further provided with a mounting lug (314) matched with the limiting groove (101), the mounting lug (314) can slide along the limiting groove (101) in a vertical direction, the limiting groove (101) is configured to limit a circumferential movement of the mounting lug (314), and the limiting groove (101) drives the mounting lug (314) of the rotating ring (31) to rotate when the control key (10) rotates.

8. The flow regulating switch valve according to claim 1, wherein:
the valve core (20) further comprises a fixing ring (8) and an elastic sheet (9), and the fixing ring (8) mounts the elastic sheet (9) on the valve core (20); and
an upper surface of the ring body (312) is provided with at least one section of saw teeth (315), and the saw teeth (315) are contacted with a lower surface of the elastic sheet (9).

9. The flow regulating switch valve according to claim 1, wherein the flow regulating switch valve further comprises a housing (30) and a nut (40) for locking the valve core (20) into the housing (30).

## Patentansprüche

1. Strömungsregulierungsschaltventil, umfassend:
eine Steuertaste (10); und
einen Ventilkern (20), umfassend eine Schaltanordnung (1) und eine Membrananordnung (2);
wobei:
die Steuertaste (10) ausgebildet ist, die Schaltanordnung (1) zu drücken und zu steuern;
die Schaltanordnung (1) ausgebildet ist, die Membrananordnung (2) anzutreiben, um einen Wasserauslass (4) zu öffnen oder zu schließen;
der Ventilkern (20) weiter eine Strömungsregulierungsanordnung (3) umfasst, die einen Drehring (31), einen Gleitblock (32) und einen Magneten (33) umfasst;
der Drehring (31) mit der Steuertaste (10) in einer Art einer Synchrondrehung verbunden ist;
der Drehring (31) eine geneigte Ebene (311) umfasst, die von hoch zu nieder übergeht, und ausgebildet ist, den Gleitblock (32) bei Drehung anzutreiben, nach oben und nach unten zu gleiten, sodass der Gleitblock (32) den Magneten (33) antreibt, sich nach oben und nach unten zu bewegen; und
der Magnet (33) ausgebildet ist, die Membrananordnung (2) zu steuern, eine Größe des Wasserauslasses (4) zu regulieren; wobei das Strömungsregulierungsschaltventil **dadurch gekennzeichnet ist, dass**
der Drehring (31) einen Ringkörper (312) umfasst und eine untere Oberfläche des Ringkörpers (312) mit der geneigten Ebene (311) versehen ist; und dass der Gleitblock (32) mit einem konvexen Streifen (321) versehen ist, der sich entlang einer vertikalen Richtung erstreckt, und eine obere Oberfläche des konvexen Streifens (321) mit der geneigten Ebene (311) in Kontakt ist.

2. Strömungsregulierungsschaltventil nach Anspruch 1, wobei
der Ventilkern (20) weiter eine Ventilkappe (5) und einen Ventilsitz (6) umfasst; und
die Ventilkappe (5) mit einem kreisförmigen, bogenförmigen Führungstisch (51) versehen ist, der Drehring (31) auf eine Außenfläche der Ventilkappe (5) aufgesetzt ist, der Ringkörper (312) sich nach unten erstreckt, um einen Führungsvorsprung (313) zu bilden, eine untere Oberfläche des Führungsvorsprungs (313) mit einer oberen Oberfläche des Führungstischs (51) in Kontakt ist, der Führungsvorsprung (313) entlang des Führungstischs (51) gleitet, wenn sich der Drehring (31) dreht, und der Führungstisch (51) ausgebildet ist, den Drehring (31) zu begrenzen, sodass eine axiale Position des Drehrings (31) unverändert ist.

3. Strömungsregulierungsschaltventil nach Anspruch 2, wobei Enden des Führungstischs (51) sich nach oben erstrecken, um einen Begrenzungsvorsprung (52) zu bilden, und der Begrenzungsvorsprung (52) ausgebildet ist, den Führungsvorsprung (313) zu begrenzen, um in dem Führungstisch (51) zu gleiten.

4. Strömungsregulierungsschaltventil nach Anspruch 3, wobei der Begrenzungsvorsprung (52) mit einer Gleitnut (53) entlang einer vertikalen Richtung versehen ist, der konvexe Streifen (321) des Gleitblocks (32) durch die Gleitnut (53) geht, die obere Oberfläche des konvexen Streifens (321) in Kontakt mit der geneigten Ebene (311) des Drehrings (31) ist und der konvexe Streifen (321) entlang der Gleitnut (53) nach oben und nach unten gleiten kann.

5. Strömungsregulierungsschaltventil nach Anspruch 4, wobei eine Führungsnut (61) in dem Ventilsitz (6) vorgesehen ist und ein unteres Ende des konvexen Streifens (321) in die Führungsnut (61) eingesetzt ist.

6. Strömungsregulierungsschaltventil nach Anspruch 5, wobei eine Druckfeder (7) zwischen einer unteren Oberfläche des Gleitblocks (32) und dem Ventilsitz (6) montiert ist und die Druckfeder (7) ausgebildet ist, den konvexen Streifen (321) in Kontakt mit der geneigten Ebene (311) zu halten.

7. Strömungsregulierungsschaltventil nach Anspruch 1, wobei
die Steuertaste (10) zylindrisch ist und eine Innenwandfläche der Steuertaste (10) mit einer Begrenzungsnut (101) entlang einer vertikalen Richtung versehen ist; und
eine Außenumfangsfläche des Ringkörpers (312) weiter mit einer Befestigungslasche (314) versehen ist, die mit der Begrenzungsnut (101) übereinstimmt, wobei die Befestigungslasche (314) entlang der Begrenzungsnut (101) in einer vertikalen Richtung gleiten kann, die Begrenzungsnut (101) ausgebildet ist, eine Umfangsbewegung der Befestigungslasche (314) zu begrenzen und die Begrenzungsnut (101) die Befestigungslasche (314) des Drehrings (31) zur Drehung antreibt, wenn sich die Steuertaste (10) dreht.

8. Strömungsregulierungsschaltventil nach Anspruch 1, wobei
der Ventilkern (20) weiter einen Fixierungsring (8) und eine elastische Lage (9) umfasst und der Fixierungsring (8) die elastische Lage (9) an dem Ventilkern (20) montiert; und
eine obere Oberfläche des Ringkörpers (312) mit mindestens einem Abschnitt von Sägezähnen (315) versehen ist und die Sägezähne (315) mit einer unteren Oberfläche der elastischen Lage (9) in Kontakt sind.

9. Strömungsregulierungsschaltventil nach Anspruch 1, wobei das Strömungsregulierungsschaltventil weiter ein Gehäuse (30) und eine Mutter (40) zum Verriegeln des Ventilkerns (20) in das Gehäuse (30) umfasst.

## Revendications

1. Soupape de commutation de régulation de débit comprenant :
une touche de commande (10) ; et
un noyau de soupape (20) comprenant un ensemble de commutation (1) et un ensemble de diaphragme (2) ;
dans laquelle :
la touche de commande (10) est configurée pour presser et commander l'ensemble de commutation (1) ;
l'ensemble de commutation (1) est configuré pour entraîner l'ensemble de diaphragme (2) à ouvrir ou fermer une sortie d'eau (4) ;
le noyau de soupape (20) comprend en outre un ensemble de régulation de flux (3) qui comprend un anneau rotatif (31), un bloc coulissant (32), et un aimant (33) ;
l'anneau rotatif (31) est relié à la touche de commande (10) en rotation synchrone ;
l'anneau rotatif (31) comprend un plan incliné (311) qui passe de haut en bas et est configuré pour entraîner le bloc coulissant (32) à coulisser vers le haut et le bas lors de la rotation de sorte que le bloc coulissant (32) entraîne l'aimant (33) à se déplacer vers le haut et le bas ; et
l'aimant (33) est configuré pour commander l'ensemble de diaphragme (2) pour réguler une taille de la sortie d'eau (4) ; la soupape de commutation de régulation de flux étant **caractérisée en ce que**
l'anneau rotatif (31) comprend un corps annulaire (312), et une surface inférieure du corps annulaire (312) est dotée du plan incliné (311) ; et **en ce que** le bloc coulissant (32) est doté d'une bande convexe (321) s'étendant le long d'une direction verticale, et une surface supérieure de la bande convexe (321) est en contact avec le plan incliné (311).

2. Soupape de commutation de régulation de flux selon la revendication 1, dans laquelle :
le noyau de soupape (20) comprend en outre un bouchon de soupape (5) et un siège de soupape (6) ; et
le bouchon de soupape (5) est doté d'une table de guidage arquée circulaire (51), l'anneau rotatif (31) est manchonné sur une surface extérieure du bouchon de soupape (5), le corps annulaire (312) s'étend vers le bas pour former un renflement de guidage (313), une surface inférieure du renflement de guidage (313) est en contact avec une surface supérieure de la table de guidage (51), le renflement de guidage (313) coulisse le long de la table de guidage (51) lorsque l'anneau rotatif (31) tourne, et la table de guidage (51) est configurée pour limiter l'anneau rotatif (31) de sorte qu'une position axiale de l'anneau rotatif (31) soit inchangée.

3. Soupape de commutation de régulation de flux selon la revendication 2, dans laquelle des extrémités de la table de guidage (51) s'étendent vers le haut pour former un renflement de limitation (52), et le renflement de limitation (52) est configuré pour limiter le renflement de guidage (313) afin de coulisser dans la table de guidage (51).

4. Soupape de commutation de régulation de flux selon la revendication 3, dans laquelle le renflement de limitation (52) est doté d'une rainure coulissante (53) le long d'une direction verticale, la bande convexe (321) du bloc coulissant (32) passe à travers la rainure coulissante (53), la surface supérieure de la bande convexe (321) est en contact avec le plan incliné (311) de l'anneau rotatif (31), et la bande convexe (321) peut coulisser vers le haut et le bas le long de la rainure coulissante (53).

5. Soupape de commutation de régulation de flux selon la revendication 4, dans laquelle une rainure de guidage (61) est prévue dans le siège de soupape (6), et une extrémité inférieure de la bande convexe (321) est insérée dans la rainure de guidage (61).

6. Soupape de commutation de régulation de flux selon la revendication 5, dans laquelle un ressort de compression (7) est monté entre une surface inférieure du bloc coulissant (32) et le siège de soupape (6), et le ressort de compression (7) est configuré pour maintenir la bande convexe (321) en contact avec le plan incliné (311).

7. Soupape de commutation de régulation de flux selon la revendication 1, dans laquelle :
la touche de commande (10) est cylindrique, et une surface de paroi intérieure de la touche de commande (10) est dotée d'une rainure de limitation (101) le long d'une direction verticale ; et
une surface de circonférence extérieure du corps annulaire (312) est en outre dotée d'une patte de montage (314) adaptée à la rainure de limitation (101), la patte de montage (314) peut coulisser le long de la rainure de limitation (101) dans une direction verticale, la rainure de limitation (101) est configurée pour limiter un mouvement circonférentiel de la patte de montage (314), et la rainure de limitation (101) entraîne la patte de montage (314) de l'anneau rotatif (31) à tourner lorsque la touche de commande (10) tourne.

8. Soupape de commutation de régulation de flux selon la revendication 1, dans laquelle :
le noyau de soupape (20) comprend en outre un anneau de fixation (8) et une feuille élastique (9), et l'anneau de fixation (8) monte la feuille élastique (9) sur le noyau de soupape (20) ; et
une surface supérieure du corps annulaire (312) est dotée d'au moins une section de dents de scie (315), et les dents de scie (315) sont en contact avec une surface inférieure de la feuille élastique (9).

9. Soupape de commutation de régulation de flux selon la revendication 1, dans laquelle la soupape de commutation de régulation de flux comprend en outre un logement (30) et un écrou (40) pour le verrouillage du noyau de soupape (20) dans le logement (30).
